# EUROPEAN PATENT SPECIFICATION

(11) **EP 2 165 399 B1**
(45) Date of publication and mention of the grant of the patent: **14.11.2012**
(21) Application number: 07805020.0
(22) Date of filing: 03.07.2007
(51) Int. Cl.: F16L 3/24, H02G 3/30, F16L 3/22

(54) **A DEVICE FOR MOUNTING A TUBULAR COMPONENT**
EINRICHTUNG ZUR ANBRINGUNG EINER RÖHRENFÖRMIGEN KOMPONENTE
DISPOSITIF POUR MONTER UN COMPOSANT TUBULAIRE

(43) Date of publication of application: 24.03.2010
(73) Proprietor: Alcatel Lucent, 75007 Paris (FR)
(72) Inventor: AHLENSTORF, Fredy, 311582 Nienburg/Weser (DE); SCHIEFER, Hans-Jürgen, 30453 Hannover (DE); KOETSIER, Arjan, 30823 Garbsen (DE); SCHUMACHER, Otto, Sarsted ort Heidsede (DE)
(74) Representative: Wetzel, Emmanuelle
(86) International application number: PCT/IB2007/002920
(87) International publication number: WO 2009/004399

(56) References cited:
- EP-A- 0 562 348
- EP-A- 1 024 570
- EP-A- 1 406 363
- DE-A1- 3 309 758
- DE-A1- 19 746 121
- DE-U- 1 850 861
- NL-A- 6 513 717
- US-A- 5 921 402

## Description

### Field of the invention

The invention relates to a device for mounting a tubular component.

### Background

Devices for mounting tubular components find various applications in a wide variety of technical fields. The devices can be regarded as holders of the tubular components. For example, devices for mounting tubular electric components are commonly used to secure the electrical components to structural members of antenna poles and antenna towers. The term 'electric components' relates according to this example in particular to cables, such as high-frequency coaxial cables, that carry signals from ground level equipment to sets of antennas attached for example at elevated positions on an antenna tower. A device for mounting tubular electric components can thus be regarded as a cable hanger.

Generally, each cable is attached to the antenna tower by a set of cable hangers that are mounted at periodically spaced attachment points along its side. After the cable hangers have been attached to the antenna tower, the cable is strung upwardly and engaged with each of the cable hangers.

Generally, antenna poles and towers are crowded due to the multiplicity of cables required for signal-carrying. To conserve tower space, it is desirable for each set of cable hangers to have a capacity to route more than a single cable up the antenna tower. Certain cable hangers are constructed to secure multiple cables so each individual set of cable hangers can support a plurality of cables.

A cable hanger that allows to secure two cables is for example known from US 5,794,897. Other devices for mounting cables have a stackable construction that permits multiple cable hangers to be interlocked so as to extend upwardly from the antenna tower. Stacked and multiple-cable-type cable hangers significantly increase the number of cables that can be routed up the antenna tower by making efficient use of the available attachment points.

EP 1 406 363 B1 describes a cable hanger for mounting a cable to a support structure that comprises a first shell half having a first recess and first and third gripping arms projecting from the first shell half into the first recess at opposite ends thereof. The cable hanger has further a second shell half configured to be brought together with the first shell half. The second shell half has a second recess capable of being registered with the first recess of the first shell half to define a first cable passageway when the first and second shell halves are brought together. The cable hanger has second and fourth gripping arms projecting from the second recess at opposite ends thereof. The first and second gripping arms opposing each other along the first cable passageway and the third and fourth gripping arms opposing each other along the first cable passageway spaced apart from the first and second gripping arms for exerting a clamping force at spaced apart positions against a first cable positioned in the first cable passageway so as to prevent movement of the cable hanger relative to the first cable. The first shell half includes a first slotted opening positioned to receive the first outwardly deflecting gripping arm when the first gripping arm is in contact with the first cable in the first recess.

The shell halves of the clamps cannot be pre-assembled before the cable hanger is installed to an antenna tower as the cables have to be inserted before into the clamps made be assembling the shell halves. The cable hanger described in the above referenced document has therefore the disadvantage that a complete installation of the cable hanger can only be in the foreseen mounting position of the cable hanger.

Furthermore, the cable hanger has the disadvantage that for a later replacement or addition of clamps a loosening or even disassembly of the parts of or the whole cable hanger construction is required.

There is therefore a need for an improved device for mounting a tubular component.

### Summary of the invention

According to an aspect of the invention, there is provided a device for mounting a tubular component. In accordance with an embodiment of the invention, the device comprises a set of clamps for receiving the tubular component and a support structure. The support structure comprises a first rail. A first alignment of clamps is mountable on a first side of the first rail and a second alignment of clamps is mountable on a second side of the first rail. The first and second sides are opposite to each other, and the set of clamps comprises the first alignment of clamps and the second alignment of clamps.

The device in accordance with the invention is for example employed as a cable hanger in antenna systems that are installed on antenna towers. The device is particularly advantageous as it can be pre-assembled and then installed at its foreseen position at, for example, the antenna tower. This allows to save installation time and thus costs for installation as the device can be mounted as a whole at its foreseen position. The locations on which the devices are mounted to antenna towers might be difficult to reach. Thus, as the device can be pre-assembled and mounted as a whole to such difficult locations, the device reduces the danger for the person who is doing the installment as the installation time on the antenna tower is reduced and as only the fixation of the device to its foreseen mounting position has to be done on the antenna tower.

The device is furthermore particularly advantageous as it can be installed on its mounting position without the need of any special tools. Furthermore, due to the design of the clamps which will be described in detail further below, the tubular components that are for example cables, a bundle of cables, or a support structure for the cables can be mounted to the device without the need of any special tools. A simple screwdriver is fully sufficient to close and/or open the brackets of the clamps as will be further outlined below.

The device in accordance with the invention can furthermore be employed for holding other tubular components such as hoses, ducts, pipes and/or tubes. Devices in accordance with the invention can for example be employed as holders for pipes of chemical or power plants.

In accordance with an embodiment of the invention, the tubular component relates to a tubular electric component. The term electric component is to be understood as comprising cables, coaxial cables, fibers and any other components used to interconnect electrical and electro-optical components.

In accordance with an embodiment of the invention, the device comprises a second rail, wherein the second rail is adapted to fix the device in a mounting position of the device and wherein the second rail is attached to the first rail. The second rail therefore comprises mounting equipment to fix the device at its foreseen position, for example on the support structure of an antenna tower.

In accordance with an embodiment of the invention, the set of clamps comprises one or more clamps. Preferably, the set of clamps comprises a plurality of clamps, wherein the clamps of the plurality of clamps are distributed among the first alignment of clamps and the second alignment of clamps.

In accordance with an embodiment of the invention, the first and second rails are made of stainless steel and the clamps are made of spring steel. As the device is preferably mounted to antenna towers, the device will be exposed to environmental impacts.

As the device is according to this embodiment of the invention fabricated of steel, it provides stability against UV-light and corrosion caused by weather and air pollution. Further, the device is insensitive against temperature variations that occur over the seasons especially in Europe, North America and Asia.

The clamps made of spring steel have the advantage that they do not show any mechanical symptoms of fatigue or creep that can be observed on clamps made of plastics.

The device made of steel is furthermore advantageous when employed in the interior as it provides good resistance against fire.

In accordance with an embodiment of the invention, the arrangement consisting of the first and second rails is designed in T- or L- form. This provides the advantage, that the first rail can be employed to mount the set of clamps thereon without the second rail forming an obstacle thereto and that the second rail can be used to fix the device in its foreseen mounting position without the first rail forming an obstacle thereto.

In accordance with an embodiment of the invention, each clamp of the set of clamps comprises a first side piece, a second side piece, an end piece, and a bracket. The first side piece comprises the first and second end and the second side piece comprises a first and second end. The bracket is pivotally attached to the first end of the first side piece and the first end of the second side piece is adapted to receive the bracket for defining a closing position of the clamp. The second ends of the first and second side pieces are attached to the end piece.

The clamps of the device in accordance with the invention are particularly advantageous as they can be closed and opened by hand or by use of a screwdriver. A complicated instrument for opening and closing a clamp or a plurality of instruments is not needed which is highly appreciated by the person who has to do the installments of the tubular components when the device is mounted on an antenna tower.

DE 197 46 121 A1 discloses embodiments of clamps that are suited to be fixed to the support structure of the device in accordance with the invention and the subject matter disclosed in this document is fully incorporated by reference to this document.

In accordance with an embodiment of the invention, the first rail comprises a recess. The end piece of a clamp further comprises a hole for receiving a fixing device such as a screw or a rivet. The recess is further adapted to receive the fixing device in order to mount and fix the clamp to the first rail.

The recess of the first rail might relate to a long hole or a long slot which allows for the mounting of the set of clamps such that each clamp is mounted by use of the recess and a fixing device to the clamp.

In accordance with an embodiment of the invention, a clamp of the first alignment of clamps and a clamp of the second alignment of clamps are attached to the first rail by use of the same fixing device. A clamp of the first alignment of the clamp and a clamp of the second alignment of the clamps counterface each other along the first rail. This leads to a very compact first and second alignment of clamps and thus allows for the mounting of a large number of clamps on a relative short first rail.

In accordance with an embodiment of the invention, the first rail comprises corrugations and/or grooves. A surface of the end piece of the clamp comprises grooves and/or corrugations. The surface of the end piece faces the first rail in the mounting position of the clamp on the first rail so that the corrugations and/or grooves provide efficient means to prevent the clamps from rotating due to the impact of for example wind.

In accordance with an embodiment of the invention, the first rail is designed in T-form or in Z-form.

In accordance with an embodiment of the invention, the first and second side pieces of a clamp comprise recesses and the recesses are adapted to receive the first rail. This allows to save the fixing devices for mounting the clamps to the first rail and thus leads to a very cost efficient and compact embodiment of the device in accordance with the invention.

In accordance with an embodiment of the invention, the first rail comprises closure parts at an end section of the first rail. The end section is opposite to the second rail. The closure parts allow to fix the clamps that have been slipped onto the first rail according to the embodiment described above.

In accordance with an embodiment of the invention, a clamp of the first alignment of clamps and the clamp of the second alignment of clamps is formed by two clamp elements. Each clamp element comprises a first side piece and a second side piece. The first side piece comprises a bracket which is pivotally mounted to the end of the first side piece and the second side piece is adapted to receive a bracket, wherein the first and second side pieces are interconnected by a flat middle part which has a recess for receiving the first rail and which allows to slip the clamp elements onto the first rail.

In accordance with an embodiment of the invention, the first rail and the second rail have a circular, ellipsoil, or rectangular cross section.

### Brief description of the drawings

In the following, embodiments of the invention will be described in greater detail by way of example only making reference to the drawings in which:
- Figure 1: shows an example of a support structure of a device in accordance with the invention,
- Figure 2: shows an example of a clamp of a device in accordance with the invention,
- Figure 3: shows an embodiment of a device in accordance with the invention,
- Figure 4: shows an embodiment of a device in accordance with the invention,
- Figure 5: shows an example of a clamp of a device in accordance with the invention,
- Figure 6: shows a plan view of an embodiment of a device in accordance with the invention,
- Figure 7: shows a plan view of an embodiment of a device in accordance with the invention,
- Figure 8: shows a top view of an embodiment of a device in accordance with the invention, and
- Figure 9: shows a plan view of an embodiment of a device in accordance with the invention.

### Detailed description

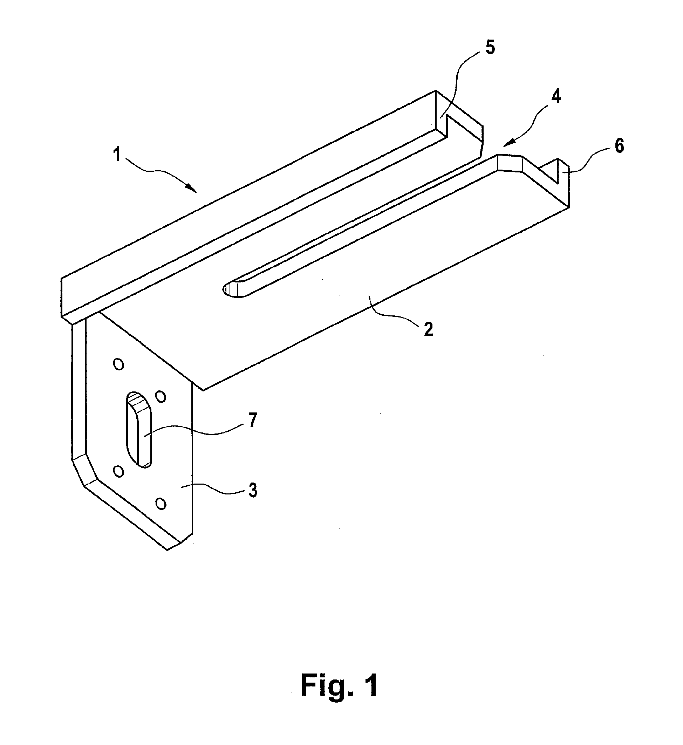

Reference numerals of analogous elements are identical in the figs. 1-9.

Fig. 1 shows an example of a support structure 1 of a device in accordance with the invention. The support structure 1 comprises a first rail 2 and a second rail 3. The first rail 2 comprises a recess 4 which can be used to mount a clamp by use of a screw to the first rail 2. The cross section of the first rail is of Z-shaped form due to the shouldered ridges 5 and 6. The purpose of the shouldered ridges 5 and 6 will be further outlined below. The second rail 3 comprises a slotted hole 7 which can be used to mount the second rail and thus the support structure 1 to the foreseen mounting position of the support structure 1 by use of a screw that engages with the slotted hole 7.

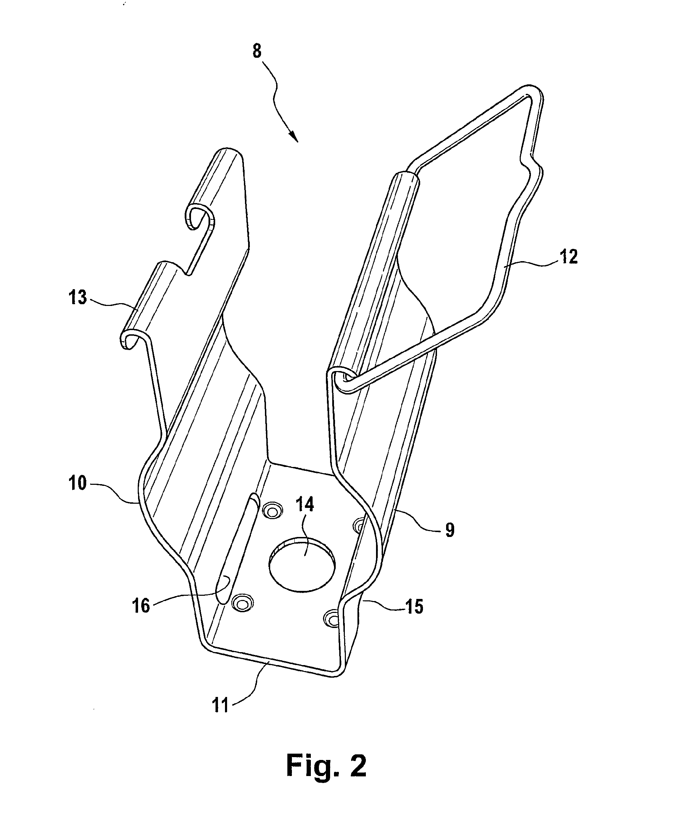

Fig. 2 shows an example of a clamp 8 of a device in accordance with the invention. The clamp 8 comprises a first side piece 9 and a second side piece 10. The clamp 8 has an end piece 11 and a bracket 12. The clamp 8 is preferably made of spring steel. As can be seen from fig. 2, the first side piece 9 as well as the second side piece 10 are connected with the end piece 11 and the bracket 12 is pivotally attached to an end of the first side piece.

The second side piece has a bending 13 which can grasp the bracket 12 in order to define a closing position for the clamp 8. The bracket 12 is moved beyond the bending 13 so that the bending 13 can grasp the bracket 12 in order to close the clamp 8. Correspondingly, the clamp 8 is opened by use of a screwdriver which is used to lift the bracket 12 over the bending 13.

The clamp 8 furthermore comprises a hole 14 which can be used to fix the clamp 8 at the support structure 1 of fig. 1. In particular, the clamp 8 can be mounted to the first rail 2 by use of a screw inserted in the hole 14 and by fixing the screw in the recess 4 of the first rail 2 by use of a bold.

The clamp 8 furthermore comprises a first recess 15 and a second recess 16. The purpose of the first and second recesses 15 and 16 will be elaborated further below.

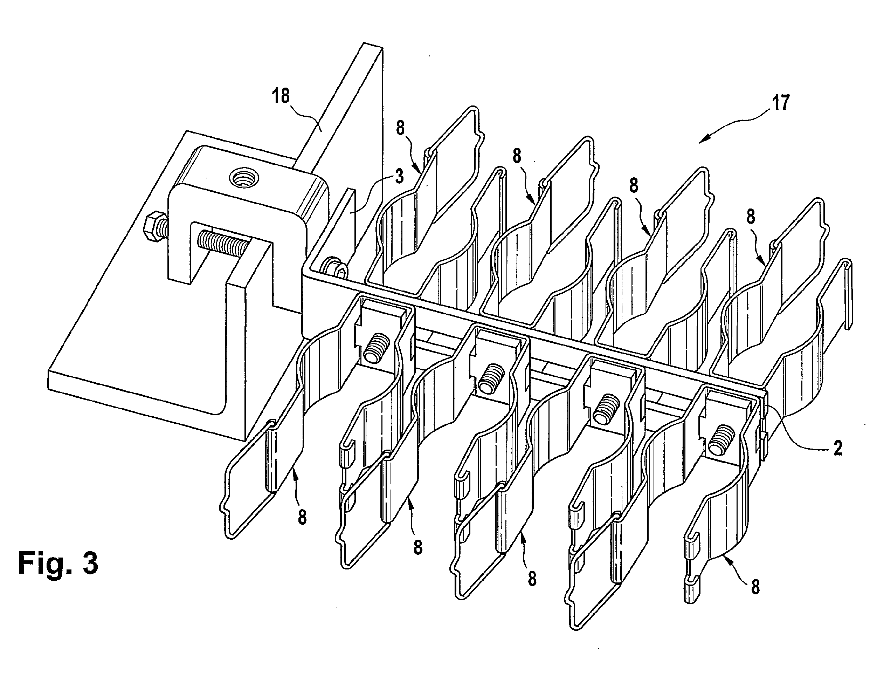

Fig. 3 shows an embodiment of a device 17 in accordance with the invention. As can be seen, a set of clamps 8 is mounted to the first rail 2 by use of screws and bolts. In particular, a first alignment of clamps is arranged on a first side of the first rail 2. The side first corresponds to the front side of the first rail 2 as shown in fig. 3. Further, a second alignment of clamps is arranged at a second side of the first rail 2. The second side corresponds to the rear side of the rail 2 according to Fig. 3 and is opposite of the first side.

A clamp of the first alignment of clamps and a clamp of the second alignment of clamps are mounted by use of a single screw and bold to the first rail 2. This allows for a compact arrangement of the clamps around the first rail 2. Furthermore, a clamp can easily be removed from the first rail by loosening the corresponding screw. This facilitates maintenance work which might have to be done on the device 17 when mounted to an antenna tower.

A bold used to fix a screw to the first rail 2 might get loose. This might for example occur when the device 17 is for a relative long time exposed to wind and rain. The wind might also exert a torque on a clamp attached by the loose screw to the first rail 2. The torque causes a rotation of the clamp around the rotation axis formed by the loose screw. A rotation might in particular occur when no cables are installed in the corresponding clamp as the cables usually exert a counter torque.

Considering now the shouldered ridges 5 and 6 of the first rail 2 as shown in Fig. 1, the upper or lower borders of the clamps 8 can be nearly form-closed arranged with respect to the shouldered ridges 5 and 6. The ridges 5 and 6 therefore also provide a counter torque on a clamp attached with a loose screw to the first rail 2 that prevents the clamp from rotating. This is in particular advantageous as the rotation might further loose the bold from the screw until the bold and finally the clamp fall off the first rail 2.

The second rail 3 is furthermore mounted to a support 18 which can be part of an antenna tower.

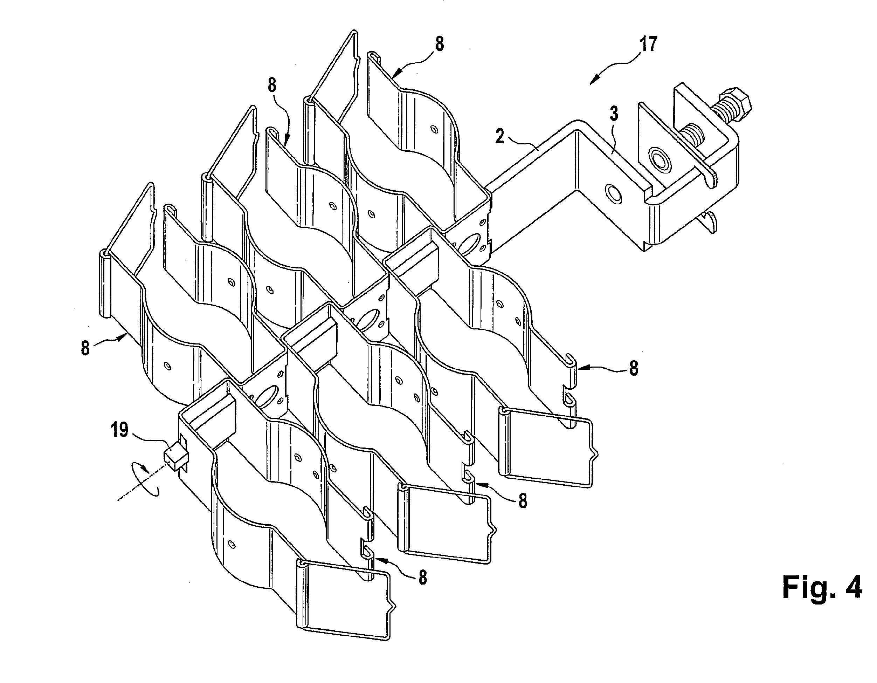

Fig. 4 shows an embodiment of a device 17 in accordance with the invention. As can be seen, the clamps 8 are slipped on the first rail 2 such that the first rail 2 pierces through the recesses of the clamps 8. The recesses of a clamp are visible in fig. 2 (first recess 15 and second recess 16).

The end of the first rail 2 comprises a closure part 19. According to this embodiment of the device 17, the closure part 19 is part of the first rail 2. It can be turned around the long axis of the rail 2 such that it defines an opening position which allows to slip the clamps 8 onto the first rail and such that it defines a closing position which prevents the clamps 8 from falling off the first rail 2.

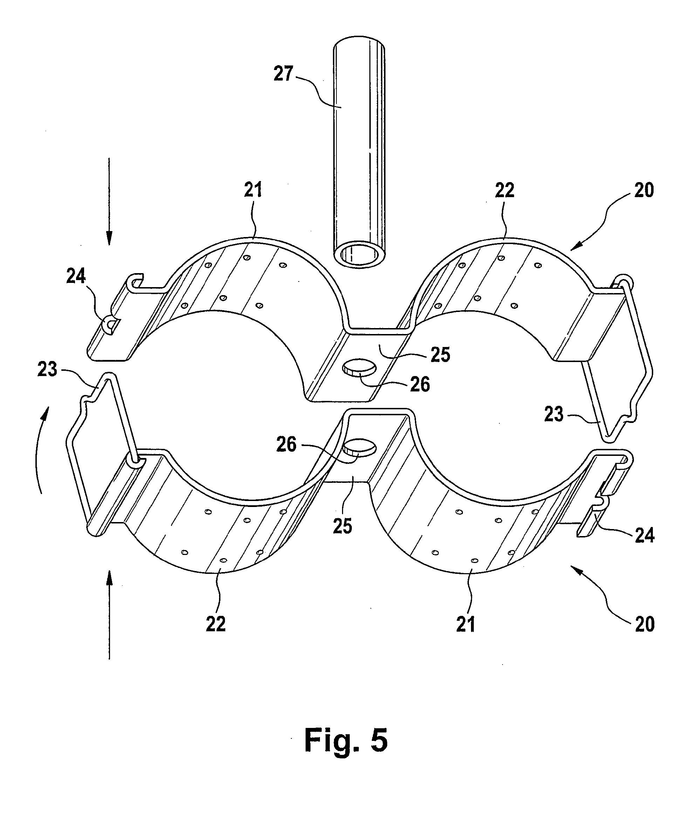

Fig. 5 illustrates how clamps are formed by two identical clamp elements 20. Each clamp element 20 comprises a first side piece 21 and a second side piece 22. The first side piece 21 comprises a bracket 23. The second side piece 22 comprises a bending 24. Furthermore, the first side piece 21 and the second side piece 22 are connected by use of a middle part 25. The clamp elements 20 can be used to form two clamps by bringing together the two clamp elements as indicated in fig. 5 such that the two clamp elements 20 stand vis-à-vis with respect to each other. The middle part 25 comprises holes 26 which can be used to slip the so formed clamps over the first rail of the device in accordance with the invention.

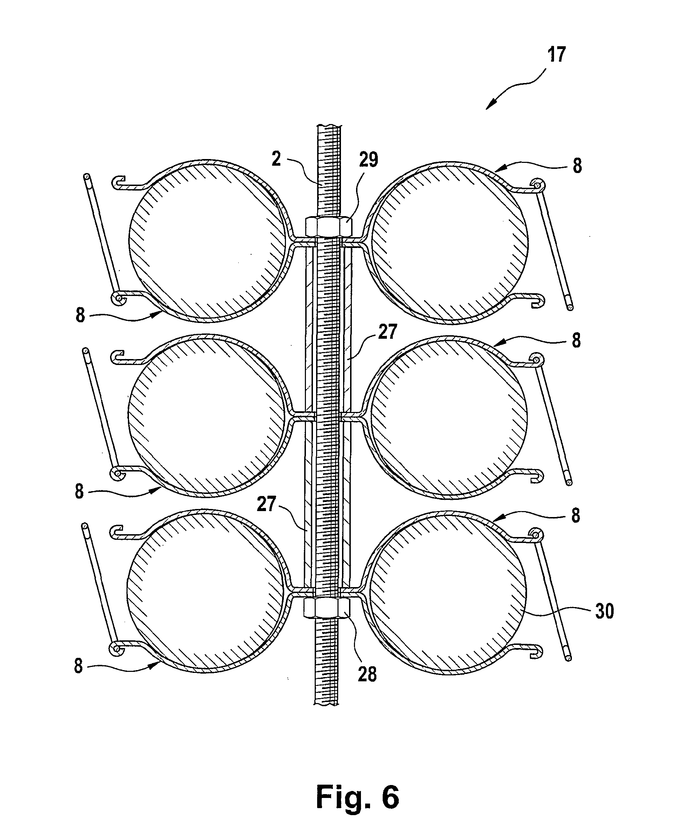

Fig. 6 shows a plan view of an embodiment of a device 17 in accordance with the invention. As can be seen, the first rail 2 of the device 17 is formed by a threaded rod and the clamps 8 of the device 17 are assembled by use of the clamp elements 20 as shown in fig. 5. Spacers 27 are placed in between the clamps 8 in order to set a predefined distance between the clamps 8. The clamps are fixed to the first rail 2 by use of screws 28 and 29 that are screwed onto the threaded rod representing the first rail 2. As indicated in fig. 6, each clamp 8 can be used to hold a cable 30 or a plurality of cables. The cable 30 can be inserted into and removed from the corresponding clamp 8 once the device 17 has been mounted to the foreseen mounting position without the need of demounting or disassembling the device 17.

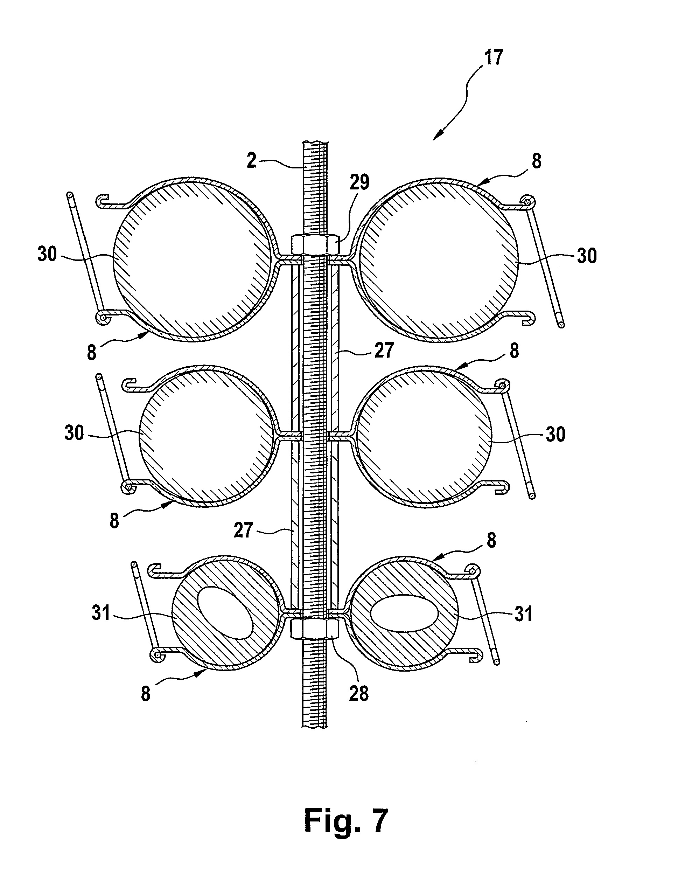

Fig. 7 shows a plan view of an embodiment of a device 17 in accordance with the invention. The difference between the device shown in fig. 7 and the device shown in fig. 6 is that the device according to fig. 7 comprises clamps 8 with various sizes. To use clamps with various sizes within the device 17 can be advantageous if different tubular electrical components have to be mounted to the device 17. For example, the smaller clamps shown at the bottom of fig. 7 are used for holding a wave guide 31 surrounded by a clamp lining, whereas the clamps at the top are used to hold cables 30 of various sizes.

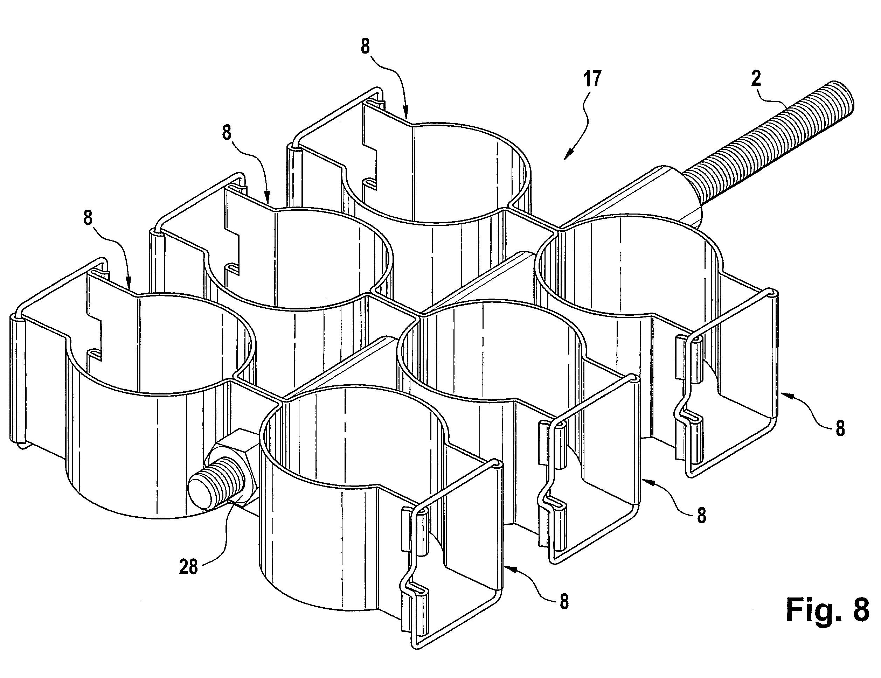

Fig. 8 shows a top view of an embodiment of device 17 corresponding to the device shown in a plan view in fig. 6.

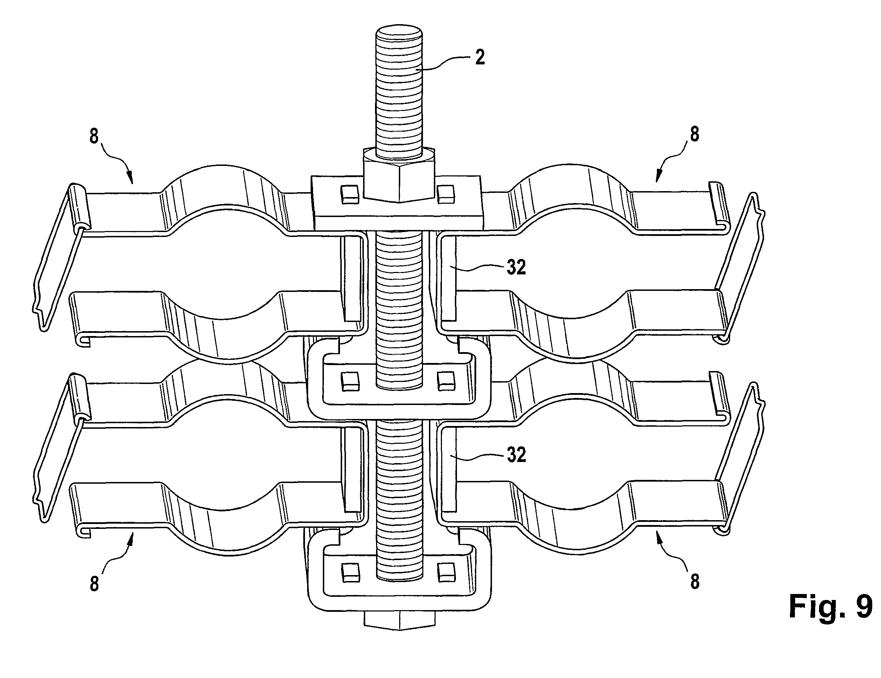

Fig. 9 shows a plan view of an embodiment of a first rail 2, wherein the first rail comprises a holder 32 that is adapted to grasp into the recesses of clamps 8 (recesses 15 and 16 in fig. 2) in order to fix the clamps 8 to the first rail which corresponds according to this example to a threaded rod.

### List of Reference Numerals

| | |
|---|---|
| 1 | Support structure |
| 2 | First rail |
| 3 | Second rail |
| 4 | Recess |
| 5 | Shouldered ridge |
| 6 | Shouldered ride |
| 7 | Slotted hole |
| 8 | Clamp |
| 9 | Side piece |
| 10 | Side piece |
| 11 | End piece |
| 12 | Bracket |
| 13 | Bending |
| 14 | Hole |
| 15 | Recess |
| 16 | Recess |
| 17 | Device |
| 18 | Support |
| 19 | Closure part |
| 20 | Clamp element |
| 21 | First side piece |
| 22 | Second side piece |
| 23 | Bracket |
| 24 | Bending |
| 25 | Middle part |
| 26 | Hole |
| 27 | Spacer |
| 28 | Screw |
| 29 | Screw |
| 30 | Cable |
| 31 | Fiber |
| 32 | Holder |

## Claims

1. A device (17) for mounting a tubular component (30, 31) comprising:
- a set of clamps (8) for receiving the tubular component,
- a support structure (1) comprising a first rail (2), wherein a first alignment of clamps is mountable on a first side of a first rail, wherein a second alignment of clamps is mountable on a second side of the rail, wherein the first and second sides are opposite to each other, and wherein the set of clamps comprises the first alignment of clamps and the second alignment of clamps,
**characterized in that** each clamp (8) of the set of clamps comprises a first side piece (9), a second side piece (10), an end piece (11), and a bracket (12), wherein the first side piece comprises a first and second end, wherein the second side piece comprises a first and second end, wherein the bracket is pivotally attached to the first end of the first side piece, wherein the first end of the second side piece is adapted to receive the bracket for defining a closing position of the clamp, and wherein the second ends of the first and second side pieces are attached to the end piece,
wherein the first and second side pieces (9, 10) of each clamp (8) comprise recesses (15, 16), wherein the recesses are adapted to receive the first rail.

2. The device according to claim 1, wherein the support structure (1) further comprises a second rail (3), wherein the second rail is adapted to fix the device in a mounting position of the device, and wherein the second rail is attached to the first rail (2).

3. The device according to claim 1, wherein the first rail comprises a recess (4), wherein the end piece of a clamp further comprises a hole (14) for receiving a fixing device, wherein the recess is further adapted to receive the fixing device for mounting the clamp to the first rail.

4. The device according to claim 3, wherein a clamp of the first alignment of clamps and a clamp of the second alignment of clamps are attached to the first rail by use of the same fixing device.

5. The device according to claim 4, wherein the first rail comprises corrugations, wherein a surface of the end piece (11) of a clamp comprises corrugations, and wherein the surface of the end piece faces the first rail in the mounting position of the clamp on the first rail.

6. The device according to claim 1, wherein the first rail (2) comprises a closure part (19) at an end section of the first rail, wherein the end section is opposite to the second rail (3), wherein the closure part is used to fix the clamps (8) slipped onto the first rail (2).

7. The device according to claim 1, wherein a clamp of the first alignment of clamps and a clamp of the second alignment of clamps is formed by two identical clamp elements (20), wherein each clamp element comprises a first side piece (21) and a second side piece (22), wherein the first side piece comprises a bracket (23) which is pivotally mounted to the end of the first side piece, wherein the second side piece is adapted to receive a bracket, wherein the first and second side pieces are interconnected by a flat middle part (25), wherein the flat middle part comprises a recess (26) for receiving the first rail (2).

## Patentansprüche

1. Vorrichtung (17) zum Montieren eines rohrförmigen Bauteils (30, 31), umfassend:
- Einen Satz von Klemmen (8) zum Aufnehmen des rohrförmigen Bauteils,
- eine Trägerstruktur (1) mit einer ersten Schiene (2), wobei eine erste Klemmenanordnung auf einer ersten Seite einer ersten Schiene montierbar ist, wobei eine zweite Klemmenanordnung auf einer zweiten Seite der Schiene montierbar ist, wobei sich die erste und die zweite Seite gegenüberliegen, und wobei der Satz von Klemmen die erste Klemmenanordnung und die zweite Klemmenanordnung umfasst,
**dadurch gekennzeichnet, dass** jede Klemme (8) des Satzes von Klemmen ein erstes Seitenteil (9), ein zweites Seitenteil (10), ein Endstück (11) und einen Bügel (12) umfasst, wobei das erste Seitenteil ein erstes und ein zweites Ende aufweist, wobei das zweite Seitenteil ein erstes und ein zweites Ende aufweist, wobei der Bügel schwenkbar an dem ersten Ende des ersten Seitenteils befestigt ist, wobei das erste Ende des zweiten Seitenteils für die Aufnahme des Bügels ausgelegt ist, um eine Schließstellung der Klemme zu definieren,
und wobei die zweiten Enden des ersten und des zweiten Seitenteil mit dem Endstück verbunden sind,
wobei das erste und das zweite Seitenteil (9, 10) einer jeden Klemme (8) Aussparungen (15, 16) aufweisen, wobei die Aussparungen für die Aufnahme der ersten Schiene ausgelegt sind.

2. Vorrichtung nach Anspruch 1, wobei die Trägerstruktur (1) weiterhin eine zweite Schiene (3) umfasst, wobei die zweite Schiene für die Befestigung der Vorrichtung in einer Montageposition der Vorrichtung ausgelegt ist, und wobei die zweite Schiene mit der ersten Schiene (2) verbunden ist.

3. Vorrichtung nach Anspruch 1, wobei die erste Schiene eine Aussparung (4) aufweist, wobei das Endstück einer Klemme weiterhin ein Loch (14) aufweist, um eine Befestigungsvorrichtung aufzunehmen, wobei die Aussparung weiterhin geeignet ist, die Befestigungsvorrichtung zum Montieren der Klemme auf der ersten Schiene aufzunehmen.

4. Vorrichtung nach Anspruch 3, wobei eine Klemme der ersten Klemmenanordnung und eine Klemme der zweiten Klemmenanordnung unter Verwendung derselben Befestigungsvorrichtung auf der ersten Schiene befestigt ist.

5. Vorrichtung nach Anspruch 4, wobei die erste Schiene Wellenbildungen aufweist, wobei eine Fläche des Endstücks (11) einer Klemme Wellenbildungen aufweist, und wobei die Fläche des Endstücks der ersten Schiene in der Montageposition der Klemme auf der ersten Schiene gegenüberliegt.

6. Vorrichtung nach Anspruch 1, wobei die erste Schiene (2) ein Verschlussteil (19) an einem Endabschnitt der ersten Schiene umfasst, wobei der Endabschnitt der zweiten Schiene (3) gegenüberliegt, wobei das Verschlussteil für die Befestigung der auf die erste Schiene (2) geschobenen Klemmen (8) verwendet wird.

7. Vorrichtung nach Anspruch 1, wobei eine Klemme der ersten Klemmenanordnung und eine Klemme der zweiten Klemmenanordnung aus zwei identischen Klemmenelementen (20) gebildet wird, wobei jedes Klemmenelement ein erstes Seitenteil (21) und ein zweites Seitenteil (22) aufweist, wobei das erste Seitenteil einen Bügel (23) umfasst, welcher schwenkbar am Ende des ersten Seitenteils montiert ist, wobei das zweite Seitenteil für die Aufnahme eines Bügels ausgelegt ist, wobei das erste und das zweite Seitenteil durch ein flaches Mittelteil (25) miteinander verbunden sind, wobei das flache Mittelteil eine Aussparung (26) für die Aufnahme der ersten Schien (2) aufweist.

## Revendications

1. Dispositif (17) pour monter un composant tubulaire (30, 31) comprenant :
- un ensemble de pinces (8) pour recevoir le composant tubulaire,
- une structure de support (1) comprenant un premier rail (2), dans lequel un premier alignement de pinces peut être monté sur un premier côté d'un premier rail, dans lequel un deuxième alignement de pinces peut être monté sur un deuxième côté du rail, dans lequel les premier et deuxième côtés sont opposés l'un à l'autre, et dans lequel l'ensemble de pinces comprend le premier alignement de pinces et le deuxième alignement de pinces,
**caractérisé en ce que** chaque pince (8) de l'ensemble de pinces comprend une première pièce latérale (9), une deuxième pièce latérale (10), une pièce d'extrémité (11), et un crochet (12), dans lequel la première pièce latérale comprend une première et une deuxième extrémités, dans lequel la deuxième pièce latérale comprend une première et une deuxième extrémités, dans lequel le crochet est fixé en pivot à la première extrémité de la première pièce latérale, dans lequel la première extrémité de la deuxième pièce latérale est adaptée pour recevoir le crochet pour définir une position de fermeture de la pince, et dans lequel les deuxièmes extrémités des première et deuxième pièces latérales sont fixées à la pièce d'extrémité,
dans lequel les première et deuxième pièces latérales (9, 10) de chaque pince (8) comprennent des enfoncements (15, 16), dans lequel les enfoncements sont adaptés pour recevoir le premier rail.

2. Dispositif selon la revendication 1, dans lequel la structure de support (1) comprend en outre un deuxième rail (3), dans lequel le deuxième rail est adapté pour fixer le dispositif dans une position de montage du dispositif, et dans lequel le deuxième rail est fixé au premier rail (2).

3. Dispositif selon la revendication 1, dans lequel le premier rail comprend un enfoncement (4), dans lequel la pièce d'extrémité d'une pince comprend en outre un orifice (14) pour recevoir un dispositif de fixation, dans lequel l'enfoncement est en outre adapté pour recevoir le dispositif de fixation pour monter la pince sur le premier rail.

4. Dispositif selon la revendication 3, dans lequel une pince du premier alignement de pinces et une pince du deuxième alignement de pinces sont fixées au premier rail en utilisant le même dispositif de fixation.

5. Dispositif selon la revendication 4, dans lequel le premier rail comprend des ondulations, dans lequel une surface de la pièce d'extrémité (11) d'une pince comprend des ondulations, et dans lequel la surface de la pièce d'extrémité est opposée au premier rail dans la position de montage de la pince sur le premier rail.

6. Dispositif selon la revendication 1, dans lequel le premier rail (2) comprend une partie de fermeture (19) au niveau d'une section d'extrémité du premier rail, dans lequel la section d'extrémité est opposée au deuxième rail (3), dans lequel la partie de fermeture est utilisée pour fixer les pinces (8) glissées sur le premier rail (2).

7. Dispositif selon la revendication 1, dans lequel une pince du premier alignement de pinces et une pince du deuxième alignement de pinces sont formées par deux éléments de pince (20) identiques, dans lequel chaque élément de pince comprend une première pièce latérale (21) et une deuxième pièce latérale (22), dans lequel la première pièce latérale comprend un crochet (23) qui est monté en pivot sur l'extrémité de la première pièce latérale, dans lequel la deuxième pièce latérale est adaptée pour recevoir un crochet, dans lequel les première et deuxième pièces latérales sont reliées par une partie médiane plate (25), dans lequel la partie médiane plate comprend un enfoncement (26) pour recevoir le premier rail (2).
